# DEMANDE DE BREVET EUROPEEN

(11) **EP 1 295 669 A1**
(43) Date de publication de la demande: **26.03.2003**
(21) Numéro de dépôt: 02291938.5
(22) Date de dépôt: 31.07.2002
(51) Int. Cl.: B23K 9/167

(54) **Procédé de soudage TIG avec apport de fil et protection gazeuse adaptée**

(30) Priorité: 21.09.2001 FR 0112215
(71) Demandeur: L'air Liquide, S.A. à Directoire et Conseil de Surveillance pour l'Etude et l'Exploitation des Procédés Georges Claude, 75321 Paris Cedex 07 (FR)
(72) Inventeur: Blot, Roger, 78110 Le Vesinet (FR); Bully, Sébastien, 30820 Caveirac (FR); Cosson, Stéphan, 44270 La Marne (FR)
(74) Mandataire: Pittis, Olivier

(57) **Abrégé**

L'invention concerne un procédé de soudage, dans lequel on assemble au moins deux pièces métalliques en réalisant une fusion d'un fil d'apport fusible au moyen d'une torche de soudage TIG munie d'une électrode en tungstène alimentée en courant électrique, et en mettant en oeuvre une protection gazeuse, de manière à réaliser au moins un joint de soudure entre les pièces métalliques. La protection gazeuse est formée d'un mélange gazeux contenant de 5 à 60 % en volume d'hélium, de 0.1 à 10 % en volume d'hydrogène et d'argon pour le reste. Les pièces à souder sont préférentiellement en acier au carbone ou en acier inoxydable.

## Description

La présente invention se rapporte à un procédé de soudage TIG avec apport de fil fusible en particulier utilisable pour souder des pièces en aciers au carbone ou inox, dans lequel on met en oeuvre une protection gazeuse adaptée formée d'un mélange gazeux constitué d'argon, d'hélium et d'hydrogène.

Aujourd'hui, il existe deux procédés principalement utilisés pour souder les aciers au carbone ou les aciers inoxydables, à savoir le procédé de soudage TIG (Tungsten Inert Gas) et le procédé de soudage MAG (Metal Active Gas).

Le procédé TIG permet d'obtenir un excellent aspect de cordon, c'est-à-dire un cordon de soudure de qualité élevée, mais est limité en termes de vitesse de soudage étant donné qu'il n'est habituellement mis en oeuvre qu'à des vitesses de l'ordre de 15 cm/min environ.

Le procédé MAG permet, à l'inverse, d'accroître notablement la vitesse de soudage jusqu'à 30 cm/min environ, mais au détriment de la qualité du cordon puisqu'il conduit à un cordon qui présente un aspect moins régulier. De plus, le procédé MAG engendre plus de projections de gouttelettes métalliques durant sa mise en oeuvre qui sont adhérentes sur les tôles et doivent être ensuite être éliminées par post-traitement des pièces ainsi soudées.

Dès lors, aucun de ces procédés ne peut être considéré comme pleinement satisfaisant.

Le but de la présente invention est alors de proposer un procédé efficace d'assemblage de pièces métalliques, en particulier en acier au carbone ou en acier inox, lequel ne présente pas les inconvénients susmentionnés, c'est-à-dire qui permette d'augmenter la vitesse de soudage par rapport à celle obtenue en procédé TIG mais sans conduire à une dégradation du cordon de soudure et sans engendrer de projections importantes comme avec un procédé MAG.

La solution est alors un procédé de soudage TIG, dans lequel on assemble au moins deux pièces métalliques en réalisant une fusion d'un fil d'apport fusible au moyen d'une torche de soudage TIG munie d'une électrode en tungstène alimentée en courant électrique, et en mettant en oeuvre une protection gazeuse, de manière à réaliser au moins un joint de soudure entre lesdites pièces métalliques, et dans lequel la protection gazeuse est formée d'un mélange gazeux contenant :
- de 5 à 60 % en volume d'hélium,
- de 0.1 à 10 % en volume d'hydrogène, et
- d'argon pour le reste.

Selon le cas, le procédé de l'invention peut comprendre l'une ou plusieurs des caractéristiques suivantes :
- l'électrode en tungstène est alimentée en courant électrique continu de manière à générer au moins un arc électrique.
- l'intensité du courant est comprise entre 30 A et 400 A, de préférence comprise entre 60 A et 250 A.
- le diamètre du fil est compris entre 0.4 mm et 2 mm, de préférence entre 0,6 mm et 1,2 mm.
- la vitesse de soudage est supérieure à 20 cm/min, de préférence comprise entre 30 cm/min et 100 cm /min.
- l'épaisseur des pièces est comprise entre 0.1 mm et 3 mm, de préférence de l'ordre de 0.5 mm à 2 mm.
- le gaz de protection est constitué de 10 à 40 % en volume d'hélium, de 1 à 9 % en volume d'hydrogène et d'argon pour le reste, de préférence le gaz de protection est constitué de 15 à 30 % en volume d'hélium, de 2 à 8 % en volume d'hydrogène et d'argon pour le reste
- on met aussi en oeuvre un dévidage automatique du fil pour amener le fil de façon régulière et permettre ainsi d'atteindre des vitesses d'assemblage élevées, par exemple plus de 20 cm/min.

En d'autres termes, l'invention repose sur l'utilisation d'arc électrique obtenu par une torche de soudage TIG (Tunsgten Inert Gas) comme source de chaleur pour fondre un fil d'apport fusible de soudage, en présence d'un mélange gazeux de protection ayant une composition particulière à base d'hélium, d'argon et d'hydrogène.

La mise en oeuvre de l'invention peut être opérée au moyen d'un matériel de soudage TIG classique, par exemple une torche PROTIG™, un système d'alimentation DVT 1500 en fil fusible à cadenceur et un poste de soudage TIG SAF 300 ACDC ; ces équipements étant commercialisés par la société LA SOUDURE AUTOGENE FRANCAISE.

Le gaz de protection utilisé pour évaluer le procédé de l'invention est un mélange d'argon, d'hélium (20% en vol.) et d'hydrogène (5% en vol.) commercialisé sous la dénomination ARCAL™ 11.

Les essais comparatifs ont été réalisés en utilisant différents mélanges gazeux et en mettant en oeuvre soit un procédé MAG classique, soit le procédé de l'invention.

Dans ces essais, le fil d'apport utilisé est un fil fusible en acier inoxydable 316 commercialisé par la société LA SOUDURE AUTOGENE FRANCAISE sous la référence NERTALIC 316 et les pièces à souder sont en acier au carbone.

L'intensité du courant continu a été fixée à 114 A, la vitesse du fil à 4,3 m/min (fil de 0,6 mm de diamètre), et l'électrode en tungstène avait un diamètre de 2 mm (électrode en tungstène thorié).

Le tableau ci-dessous rapporte les résultats obtenus, en termes de vitesse de soudage (en cm/min), lors de ces essais.

**Tableau**

| **Procédé et gaz de protection** | **Vitesse de soudage maximale (cm/min)** |
|---|---|
| MAG classique avec gaz ARCAL™ 121 (Ar + 8% CO₂) | 30 |
| TIG avec fil d'apport avec gaz ARCAL™ 31 (Ar+ 5% He) | 24 |
| TIG avec fil d'apport avec gaz ARCAL™ 32 (Ar + 25 % He) | 26 |
| Procédé de l'invention avec gaz ARCAL™ 11 (Ar + 20% vol He + 5% vol H₂) | 31 |
| TIG avec fil d'apport avec gaz NOXAL™ 2 (Ar + 2,5 % H₂) | 27 |

Les gaz ARCAL™, NOXAL™ et INARC™ sont disponibles auprès de la société L'AIR LIQUIDE.

Comme on le voit dans le tableau ci-dessus, la vitesse de soudage atteinte dépend étroitement du mélange gazeux utilisé en tant que gaz de protection.

Le mélange gazeux contenant 20 % d'hélium, 5% d'hydrogène et le reste d'argon (ARCAL™ 11) utilisé conformément à l'invention permet d'accroître la vitesse de soudage par rapport non seulement au procédé TIG avec apport de fil mais utilisant des gaz différents mais aussi par rapport à un procédé MAG classique mais sans présenter les inconvénients habituels de ce procédé MAG, à savoir sans détérioration de la qualité du cordon et avec moins de projections de gouttelettes métalliques.

## Revendications

1. Procédé de soudage, dans lequel on assemble au moins deux pièces métalliques en réalisant une fusion d'un fil d'apport fusible au moyen d'une torche de soudage TIG munie d'une électrode en tungstène alimentée en courant électrique, et en mettant en oeuvre une protection gazeuse, de manière à réaliser au moins un joint de soudure entre lesdites pièces métalliques, **caractérisé en ce que** la protection gazeuse est formée d'un mélange gazeux contenant :
- de 5 à 60 % en volume d'hélium,
- de 0.1 à 10 % en volume d'hydrogène, et
- d'argon pour le reste.

2. Procédé selon la revendication 1, **caractérisé en ce que** le gaz de protection est constitué de 10 à 40 % en volume d'hélium, de 1 à 9 % en volume d'hydrogène et d'argon pour le reste.

3. Procédé selon la revendication 1 ou 2, **caractérisé ce que** l'intensité du courant est comprise entre 30 A et 400 A

4. Procédé selon l'une des revendications 1 à 3, **caractérisé en ce que** l'intensité du courant est comprise entre 60 A et 250 A.

5. Procédé selon l'une des revendications 1 à 4, **caractérisé en ce que** la vitesse de soudage, en manuel, est supérieure à 20 cm/min.

6. Procédé selon l'une des revendications 1 à 5, **caractérisé en ce que** les pièces à souder sont en acier au carbone ou en acier inox.

7. Procédé selon l'une des revendications 1 à 6, **caractérisé en ce que** le diamètre du fil est compris entre 0.4 mm et 2 mm, de préférence entre 0,6 mm et 1,2 mm.

8. Procédé selon l'une des revendications 1 à 7, **caractérisé en ce que** la vitesse de soudage, en manuel, est comprise entre 30 cm/min et 100 cm /min.

9. Procédé selon l'une des revendications 1 à 8, **caractérisé en ce que** l'épaisseur des pièces est comprise entre 0.1 mm et 3 mm, de préférence de l'ordre de 0.5 mm à 2 mm.

10. Procédé selon l'une des revendications 1, 2 ou 4, **caractérisé en ce que** le gaz de protection est constitué de 15 à 30 % en volume d'hélium, de 2 à 8 % en volume d'hydrogène et d'argon pour le reste.
